Europäisches Patentamt

European Patent Office

Office européen des brevets

(19)

(11) Veröffentlichungsnummer: **0 191 897**
A2

(12) **EUROPÄISCHE PATENTANMELDUNG**

(21) Anmeldenummer: 85111916.4

(22) Anmeldetag: 20.09.85

(51) Int. Cl.⁴: **G 06 F 3/12**
G 06 F 15/62, G 06 K 15/00

(30) Priorität: 16.02.85 DE 3505398

(43) Veröffentlichungstag der Anmeldung:
27.08.86 Patentblatt 86/35

(84) Benannte Vertragsstaaten:
AT CH DE LI SE

(71) Anmelder: GRUNDIG E.M.V. Elektro-Mechanische
Versuchsanstalt Max Grundig holländ. Stiftung & Co.
KG.
Kurgartenstrasse 37
D-8510 Fürth(DE)

(72) Erfinder: Berk, Gerhardt, Dipl.-Ing. (FH)
Kirchenweg 28
D-8507 Oberasbach(DE)

(72) Erfinder: Malter, Jürgen
Friedrich Ebert Strasse 115
D-8510 Fürth(DE)

(74) Vertreter: Kolb, Max
Kurgartenstrasse 37
D-8510 Fuerth/Bayern(DE)

(54) Verfahren und Schaltungsanordnung zur Verbesserung der Darstellung von Zeichen und Graphiken eines Ausgabemediums insbesondere eines Druckers.

(57) Es wird ein Verfahren zur Verbesserung der Darstellung von mehrfarbigen bzw. Grautöne enthaltenden einfarbigen graphischen Zeichen auf einem Ausgabemedium insbesondere eines Druckers beschrieben, mit dem eine gute Erkennbarkeit auch sehr feiner Farbstufungen ohne großen Aufwand, insbesondere Speicheraufwand, möglich ist. Dies wird erfindungsgemäß erreicht durch ein Ermitteln und Drucken der Konturen der graphischen Zeichen nacheinander zeichenweise und Aufteilung des darzustellenden Bildes in Vordergrund und Hintergrund sowie durch Auswertung von Farbart bzw. Graustufe. Ferner werden die Konturen der jeweiligen Zeichenränder zu benachbarten Zeichen ermittelt und eine zeicheninterne Konturermittlung durch Vergleich der innerhalb einer Reihe nebeneinander liegenden Bildpunkte Zeile für Zeile und Spalte für Spalte durchgeführt, wobei beim letzten Zeichen einer Zeile bzw. der letzten Zeichenzeile gegen den Bildhintergrund ausgewertet wird.

FIG. 3

# VERFAHREN UND SCHALTUNGSANORDNUNG ZUR VERBESSERUNG DER DARSTELLUNG VON ZEICHEN UND GRAPHIKEN EINES AUSGABEMEDIUMS INSBESONDERE EINES DRUCKERS

## BESCHREIBUNG

Die Erfindung bezieht sich auf ein Verfahren zur Verbesserung der Darstellung von mehrfarbigen bzw. Grautöne enthaltenden einfarbigen graphischen Zeichen auf einem Ausgabemedium insbesondere eines Druckers gemäß den Merkmalen des Oberbegriffs des Patentanspruchs 1 sowie eine Schaltungsanordnung zur Durchführung des Verfahrens.

In der Computertechnik wird zunehmend auch im Heimgebrauch mit graphischen Darstellungen, vorzugsweise auf Kathodenstrahlröhren (CRT)-Bildschirmen gearbeitet.

Bei der Ausgabe einer Hard-Kopie auf einem Ausgabemedium, insbesondere einem Drucker, tritt hierbei
das Problem auf, daß in vielen Fällen die Originalgraphik mehr Grau- oder Farbstufen enthält, als der
Drucker wiedergeben kann.

Insbesondere bei moderneren und leistungsfähigen
Telekommunikationsdiensten, beispielsweise dem Bildschirmtext (Btx)-Dienst mit seinen vier Farbtafeln
zu je acht Farben, werden oftmals Lösungen benötigt,
die eine möglichst gute Erkennbarkeit der Originalgraphik auf der Hard-Kopie erlauben. Bisherige Lösungen haben den Nachteil, daß graphische Zeichen nur
unvollständig bzw. mit störenden Verfälschungen
wiedergegeben werden.

Aus "Rundfunktechnische Mitteilungen", Jahrgang 7,
1963, Seiten 160 bis 171 ist die Erzeugung von Umrißbildern beim Fernsehen durch Umformung des Videosignals
bekannt. Durch Differentiation des Videosignals und
anschließende Gegentaktgleichrichtung werden dabei
Umrißbilder erzeugt, die nur noch die Kanten, aber
nicht mehr die Grau-Abstufungen des ursprünglichen
Bildes enthalten. Zur Gewinnung senkrechter und waagerechter Umrisse wird in horizontaler und in vertikaler
Richtung differenziert, wobei die für die vertikale
Differentiationsrichtung benötigte Verzögerung des
Videosignals um eine Zeilenperiode mit einer Ultraschall-Verzögerungsleitung erreicht wird. Dieses bekannte Verfahren ist jedoch für graphische Zeichen,
die bereits als digital codierte Information vorliegen, zu aufwendig.

Aus der DE-OS 33 07 293 ist ein Verfahren zum Drukken mehrfarbiger Zeichen, Symbole und Graphiken
einer darstellbaren Textseite moderner Kommunikationssysteme, wie Bildschirmtext, Teletext und Videotext
mittels eines Einfarbendruckers bekannt. Dabei werden
für die Zeichenaufarbeitung die Grenzlinien der darzustellenden Zeichen nach den Vorder- und Hintergrundfarben ermittelt und in einem Konturenspeicher abgelegt. Ferner werden die Farbunterschiede zwischen
benachbarten Zeichenplätzen festgestellt und die
Grenzlinien ebenfalls in einem Farbkonturenspeicher
abgelegt. Die einzelnen Speicherinformationen werden
von einer mikroprozessorgesteuerten Ablaufschaltung
ausgelesen und in einem Arbeitsspeicher, der dem
Drucker zugeordnet ist, darstellungszeilenmäßig abgelegt und von einer Druckersteuerung ausgelesen und
ausgedruckt. - Dieses Verfahren und die in dieser
Offenlegungsschrift beschriebene Schaltungsanordnung
arbeiten jedoch nach einem bildpunktorientierten
Verfahren (bit-mapping) und mit zusätzlichen Speichern (vgl. die oben genannten Konturenspeicher für
die durch Vorder- und Hintergrundfarbenabweichung
vorgegebene Grenzumrißinformation des Zeichens;

Speicher für sogenannte DRCS-Zeichen und zugehöriger
Konturenspeicher sowie Farbkonturenspeicher) und ist
dadurch aufwendig. Ferner wird gemäß dem bekannten
Verfahren ein Bildpunktvergleich zwischen Zeichengenerator und im Punktspeicher abgelegtem Zeichen
durchgeführt, um das Zeichen zu identifizieren.

Der Erfindung liegt die Aufgabe zugrunde, die Nachteile der unvollständigen und verfälschten Wiedergabe
bekannter Verfahren zu vermeiden und eine möglichst
gute Erkennbarkeit auch sehr feiner Farbstufungen
auf einem Ausgabemedium, insbesondere eines Druckers,
mit nicht ausreichenden Abstufungsdarstellungsmöglichkeiten ohne großen Aufwand, insbesondere ohne großen
Speicheraufwand, zu erzielen.

Diese Aufgabe wird erfindungsgemäß durch die im kennzeichnenden Teil des Patentanspruchs 1 angegebenen
Maßnahmen gelöst.

Vorteilhafte Ausgestaltungen des erfindungsgemäßen
Verfahrens ergeben sich aus den Unteransprüchen 2 - 4.

Eine Schaltungsanordnung zur Durchführung des Verfahrens sowie eine vorteilhafte Weiterbildung hierzu
sind in den Patentansprüchen 5 und 6 beschrieben.

Die Erfindung ermöglicht ohne großen Aufwand eine
verbesserte Darstellung graphischer Zeichen mit mehreren Grau- oder Farbstufen auf Ausgabemedien, insbesondere Druckern, mit nicht ausreichenden Grau-
oder Farbstufendarstellungsmöglichkeiten, und insbesondere einen deutlicheren Ausdruck mehrfarbiger
Bildschirmtext-Bilder auf Schwarz/Weiß-Matrix-
Druckern. Durch das erfindungsgemäße Verfahren lassen sich auch Graphiken mit sehr feiner Grau- bzw.
Farbstufung auf einem monochromen Drucker darstellen.

Die Erfindung wird im folgenden unter Bezugnahme auf
die Zeichnungsfiguren beispielsweise näher erläutert.
Es zeigen

  Fig. 1  den Ausdruck einer Bildschirmtext-
       Seite nach herkömmlicher Art,

  Fig. 2  die gleiche Bildschirmtext-Seite,
       ausgedruckt nach dem erfindungsgemäßen Verfahren und

  Fig. 3  ein Blockschaltbild einer Schaltungs-
       anordnung zur Durchführung des er-
       findungsgemäßen Verfahrens.

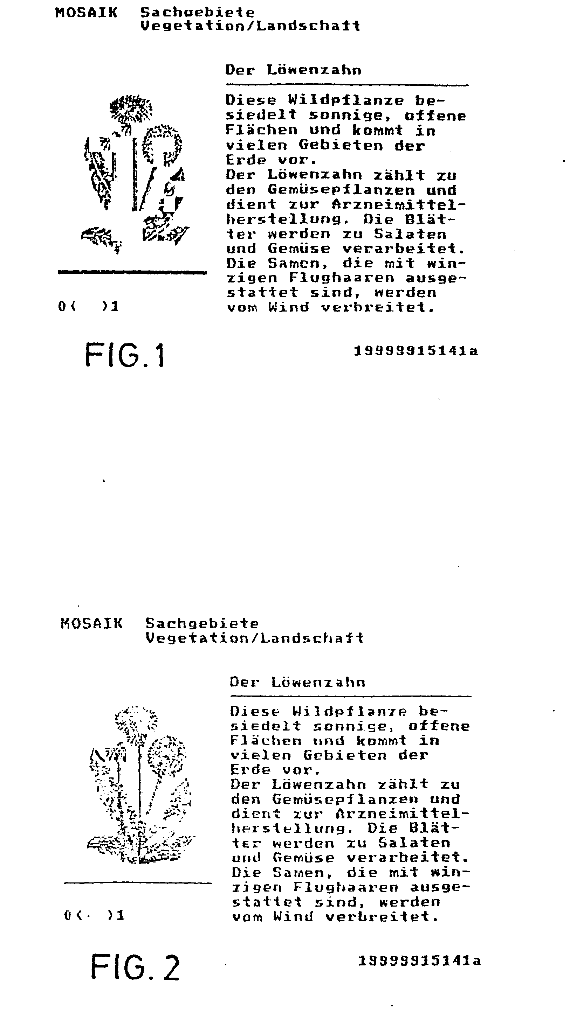

Die Figur 1 zeigt den Ausdruck einer Bildschirmtext-
(Btx)-Seite gemäß den herkömmlichen Verfahren, während Fig. 2 das gleiche Motiv in verbesserter Darstellung
nach dem erfindungsgemäßen Verfahren zeigt.

Erfindungsgemäß wird die Verbesserung der Darstellung
durch eine Auswertung der Konturen der graphischen
Zeichen erzielt. Dabei werden die Konturen der graphischen Zeichen nacheinander zeichenweise ermittelt und
gedruckt, wobei für die Konturenermittlung im ersten
Schritt eine Aufteilung des darzustellenden Bildes in
Bildvordergrund und Bildhintergrund vorgenommen wird
und in einem zweiten Schritt die Farbart bzw. Graustufe
der Bildpunkte ausgewertet wird. Ein weiterer Schritt
besteht in der Ermittlung der Kontur am jeweiligen
Zeichenrand zum links davon liegenden Zeichen bzw.
beim ersten Zeichen einer Zeile zum Bildhintergrund.
Auch wird die Kontur des jeweiligen Zeichenrandes zum
darüberliegenden Zeichen bzw.beim Zeichen in der ersten Zeile zum Bildhintergrund ermittelt. Anschließend
erfolgt eine zeicheninterne Konturenermittlung durch
Vergleich der innerhalb einer Reihe nebeneinander
liegenden Bildpunkte Zeile für Zeile und Spalte für
Spalte. D. h. es wird eine Bildinhaltsauswertung vorgenommen, bei der beginnend von der ersten Bildzeile
die nebeneinander liegenden Bildpunkte auf Änderungen
zwischen Vordergrund und Hintergrund verglichen werden,
und diese Auswertung bis zur letzten Zeile vorgenommen
wird. Analog hierzu erfolgt eine spaltenweise Auswertung, d. h. ein Vergleich zwischen einem oberen und einem unteren Punkt. Als letzter Verfahrensschritt wird eine Konturenermittlung des jeweils letzten Zeichens einer Zeile sowie der letzten Zeichenzeile gegen den Bildhintergrund vorgenommen.

Zur verbesserten Darstellung alpha-numerischer Zeichen werden erfindungsgemäß die ersten beiden Verfahrensschritte angewendet und für die Druckeransteuerung die zeicheninterne Punktinformation dem Zeichengenerator entnommen.

Bei einem horizontalen Wechsel der Farbart bzw. Graustufe von Bildhintergrund nach Bildvordergrund wird ein einzelner Punkt rechts der Trennungslinie gedruckt, während bei einem Wechsel von Bildvordergrund nach Bildhintergrund ein einzelner Punkt links der Trennungslinie gedruckt wird. Bei einem vertikalen Wechsel von Farbart bzw. Graustufe wird analog zu den eben geschilderten Maßnahmen verfahren.

Tritt der Fall ein, daß doppelt hohe und/oder doppelt breite Zeichen verbessert ausgedruckt werden sollen, so wird das erfindungsgemäße Verfahren sinngemäß auf alle angrenzenden Zeichen ausgedehnt.

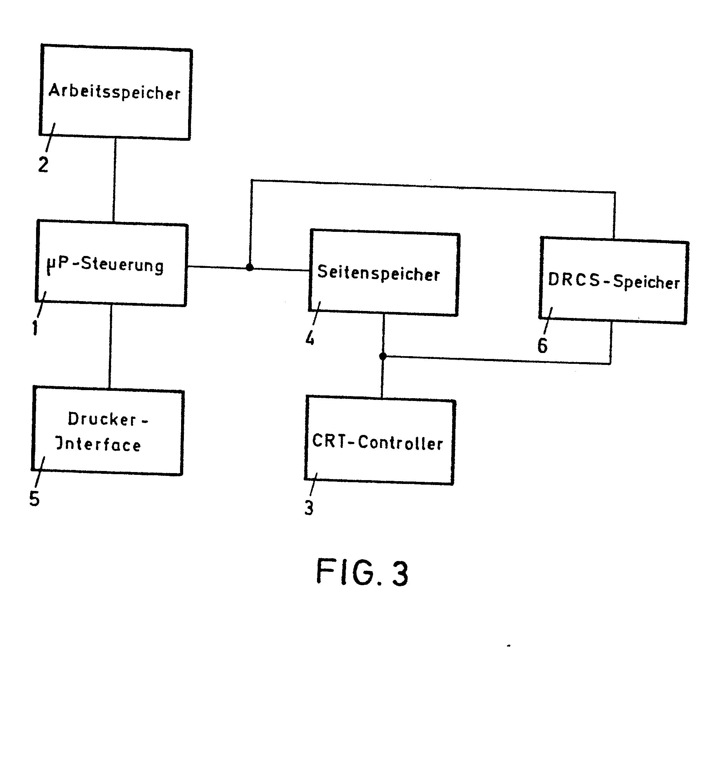

Eine Schaltungsanordnung zur Durchführung des erfindungsgemäßen Verfahrens ist in Form eines Blockschaltbildes in Fig. 3 dargestellt. Hierbei ist eine Mikroprozessorsteuerung 1 mit einem Arbeitsspeicher 2 und einem Drucker-Interface 5 verbunden. Ferner besteht
eine Verbindung der Mikroprozessorsteuerung 1 zu
einem Seitenspeicher 4 und einem Speicher 6 für frei
definierbare Zeichen, sogenannte DRCS-Zeichen. Seitenspeicher 4 und DRCS-Speicher 6 sind schließlich mit
einem CRT-Controller 3 verbunden.

Durch die erfindungsgemäße Zeichenauswertung lassen
sich auch Graphiken mit sehr feiner Grau- bzw. Farbstufung auf einem monochromen Drucker darstellen. In
der gleichen Weise ist das erfindungsgemäße Verfahren
auch bei Grauwert- und Farbdrucken anwendbar, wobei
in ähnlicher Weise wie beim Farbfernsehsystem die
Konturendarstellung für eine gute Wiedererkennbarkeit
der Graphik bzw. des Zeichens sorgt, während durch
unterschiedlich graue oder farbige Ausfüllung der von
den Konturen gebildeten Zonen der Gesamteindruck noch
weiter verbessert wird.

Da bei der vorliegenden Erfindung die alphanumerischen
Zeichen der Btx-Seite als "Vordergrund" dargestellt
werden und alle anderen (Graphik-)Zeichen "konturiert"
werden, ist im Gegensatz zu den bekannten Verfahren
und Schaltungsanordnungen ein (zusätzlicher) Konturenspeicher nicht notwendig. Darüber hinaus liegt bei der
vorliegenden Erfindung der Code für das Zeichen bereits im Bildwiederholspeicher vor, d. h. die Form
steht nicht in einem Pufferspeicher, sondern lediglich
die Codes für Farbe, Größe, etc.

ǀ

VERFAHREN UND SCHALTUNGSANORDNUNG ZUR VERBESSERUNG
DER DARSTELLUNG VON ZEICHEN UND GRAPHIKEN EINES
AUSGABEMEDIUMS INSBESONDERE EINES DRUCKERS

PATENTANSPRÜCHE

1. Verfahren und Schaltungsanordnung zur Verbesserung der Darstellung von mehrfarbigen bzw. Grautöne enthaltenden einfarbigen graphischen Zeichen
auf einem Ausgabemedium insbesondere eines Druckers,
wobei die Konturen der graphischen Zeichen ausgewertet werden und die Zeichen in Form von Codes in einem
Pufferspeicher abgelegt sind und der den Codes zugeordnete Zeicheninhalt (Form/Farbe/Attribute) einem
Festwertspeicher oder einem ladbaren Speicher mit
wahlfreiem Zugriff (RAM) entnommen wird,
g e k e n n z e i c h n e t   d u r c h   folgende
Verfahrensschritte:

a-  Die Konturen der graphischen Zeichen werden nacheinander zeichenweise ermittelt und gedruckt,

2

wobei für die Konturenermittlung im ersten Schritt
eine Aufteilung des darzustellenden Bildes in
Bildvordergrund und Bildhintergrund vorgenommen
wird und im zweiten Schritt die Farbart bzw. Graustufe der Bildpunkte ausgewertet wird

b- Ermittlung der Kontur am jeweiligen Zeichenrand
zum links davon liegenden Zeichen bzw. beim ersten
Zeichen einer Zeile zum Bildhintergrund

c- Ermittlung der Kontur des jeweiligen Zeichenrandes
zum darüber liegenden Zeichen bzw. Zeichen in der
ersten Zeile zum Bildhintergrund

d- zeicheninterne Konturenermittlung durch Vergleich
der innerhalb einer Reihe nebeneinander liegenden
Bildpunkte Zeile für Zeile und Spalte für Spalte

e- Konturenermittlung des jeweils letzten Zeichens
einer Zeile sowie der letzten Zeichenzeile gegen
den Bildhintergrund.

2. Verfahren nach Anspruch 1, d a d u r c h
g e k e n n z e i c h n e t , daß zur Darstellung
alpha-numerischer Zeichen die Verfahrensschritte a und
b angewendet werden und für die Druckeransteuerung
die zeicheninterne Punktinformation dem Zeichengenerator entnommen wird.

3

3. Verfahren nach Anspruch 1,  d a d u r c h
g e k e n n z e i c h n e t ,   daß bei einem horizontalen Wechsel der Farbart bzw. Graustufe von Bildhintergrund nach Bildvordergrund ein einzelner Punkt
rechts der Trennungslinie gedruckt wird, während bei
einem Wechsel von Bildvordergrund nach Bildhintergrund
ein einzelner Punkt links der Trennungslinie gedruckt
wird, und bei vertikalem Wechsel analog verfahren wird.

4. Verfahren nach einem der Ansprüche 1 bis 3,
d a d u r c h   g e k e n n z e i c h n e t ,   daß
bei doppelt hohen und/oder doppelt breiten Zeichen
das Verfahren sinngemäß auf alle angrenzenden Zeichen
ausgedehnt wird.

5. Schaltungsanordnung zur Durchführung des Verfahrens nach einem der Ansprüche 1 bis 4,   g e -
k e n n z e i c h n e t   d u r c h   eine Mikroprozessorsteuerung (1),einen Arbeitsspeicher (2), einen
CRT-Controller (3), einen Seitenspeicher (4) und ein
Drucker-Interface (5).

6. Schaltungsanordnung nach Anspruch 5,  d a -
d u r c h   g e k e n n z e i c h n e t ,   daß bei
Verarbeitung von frei definierbaren Zeichen (DRCS-
Zeichen) zusätzlich ein DRCS-Speicher (6) vorgesehen
ist.

4

MOSAIK   Sachgebiete
         Vegetation/Landschaft

Der Löwenzahn
_____

Diese Wildpflanze besiedelt sonnige, offene
Flächen und kommt in
vielen Gebieten der
Erde vor.
Der Löwenzahn zählt zu
den Gemüsepflanzen und
dient zur Arzneimittelherstellung. Die Blätter werden zu Salaten
und Gemüse verarbeitet.
Die Samen, die mit winzigen Flughaaren ausgestattet sind, werden
vom Wind verbreitet.

0(    )1

FIG.1                    19999915141a


MOSAIK   Sachgebiete
         Vegetation/Landschaft

Der Löwenzahn
_____

Diese Wildpflanze besiedelt sonnige, offene
Flächen und kommt in
vielen Gebieten der
Erde vor.
Der Löwenzahn zählt zu
den Gemüsepflanzen und
dient zur Arzneimittelherstellung. Die Blätter werden zu Salaten
und Gemüse verarbeitet.
Die Samen, die mit winzigen Flughaaren ausgestattet sind, werden
vom Wind verbreitet.

0(·  )1

FIG.2                    19999915141a

FIG. 3